# EUROPEAN PATENT SPECIFICATION

(11) **EP 2 781 944 B1**
(45) Date of publication and mention of the grant of the patent: **04.05.2016**
(21) Application number: 14154834.7
(22) Date of filing: 12.02.2014
(51) Int. Cl.: G02B 21/26

(54) **Stage device**
Bühnenvorrichtung
Dispositif d'étapes

(30) Priority: 20.02.2013 JP 2013031463
(43) Date of publication of application: 24.09.2014
(73) Proprietor: Olympus Corporation, Tokyo 151-0072 (JP)
(72) Inventor: Ue, Yoshihiro, Tokyo, 151-0072 (JP)
(74) Representative: Schicker, Silvia

(56) References cited:
- JP-A- 2006 178 120
- JP-A- 2007 024 927
- JP-A- 2011 145 468
- US-A- 4 568 188
- US-A- 4 653 878

## Description

### Field

The present invention relates to a stage device which is attached to a microscope and on which a specimen is placed.

### Background

Recently, there has been known a stage device that includes a rotary stage which can rotate about an optical axis of an objective lens and a holder which places thereon a specimen, on an XY stage which is movable in a plane (see Japanese Unexamined Patent Application Publication No. 2011-145468, for example). In this technique, an observation target on the specimen is observed by moving the XY stage and rotating the rotary state.

However, in the above conventional technique, when rotating the rotary stage after moving the XY stage, a rotation axis of the rotary stage and a center of an observation field of the objective lens are deviated from each other. Therefore, the observation target of the specimen may be deviated from a visual field area of the objective lens, and sight of the observation target of the specimen may be lost.

The present invention has been made in view of the foregoing, and an object of the invention is to provide a stage device that includes an XY stage and a rotary stage, and can prevent an observation target of a specimen from being deviated from a visual field area of an objective lens even when rotating the rotary stage after moving the XY stage.

### Summary

In the invention, a stage device is attachable to a microscope for observing a specimen by enlarging the specimen through an objective lens, and the specimen is placed on the stage device. The stage device includes a planar base configured to be fixed to the microscope, a first stage that is disposed on the base and is movable in a plane parallel to a principal surface of the base, a second stage that is disposed on the base and is rotatable about an optical axis of the objective lens, the optical axis being perpendicular to a movement direction of the first stage, a specimen support that is placed on the second stage and is slidable in the plane, and a first clutch mechanism that is coupled to the specimen support and the first stage and is capable of transmitting power from the first stage to the specimen support. The first clutch mechanism is not configured to transmit power from the first stage to the specimen support when the second stage rotates, and is configured to transmit power from the first stage to the specimen support when the first stage moves.

In an example, a stage device is attachable to a microscope for observing a specimen by enlarging the specimen through an objective lens, and the specimen is placed on the stage device. The stage device includes a base configured to be fixed to the microscope, a first stage that is disposed on the base and is movable in a plane parallel to a principal surface of the base, a rod-shaped operation handle that has a first end rotatably attached to the base and is configured to receive an input of power, and a transmission mechanism that is coupled to the first stage and the operation handle and is configured to transmit power from the operation handle to the first stage. A second end of the operation handle is movable on a surface of a virtual sphere whose center is the first end and whose radius is a length in a longitudinal direction of the operation handle.

The above and other features, advantages and technical and industrial significance of this invention will be better understood by reading the following detailed description of presently preferred embodiments of the invention, when considered in connection with the accompanying drawings.

### Brief Description of Drawings

FIG. 1 is a diagram schematically illustrating an entire configuration of a microscope according to a first embodiment of the present invention;
FIG. 2 is a perspective view illustrating the configuration of a stage device according to the present invention;
FIG. 3 is a partial sectional view taken along line III-III of FIG. 2;
FIG. 4 is a perspective view illustrating a state of the stage device according to the present invention after moving an XY stage within an XY plane;
FIG. 5 is a perspective view schematically illustrating a state of the stage device according to the present invention after rotating a rotary stage;
FIG. 6A is a diagram schematically illustrating the change of a visual field area observed by the microscope according to the movement of the stage device according to the present invention;
FIG. 6B is a diagram schematically illustrating the change of the visual field area observed by the microscope according to the movement of the stage device according to the present invention;
FIG. 6C is a diagram schematically illustrating the change of the visual field area observed by the microscope according to the movement of the stage device according to the present invention;
FIG. 6D is a diagram schematically illustrating the change of the visual field area observed by the microscope according to the movement of the stage device according to the present invention;
FIG. 7 is a perspective view illustrating a configuration of a stage device which is attached to a microscope according to an example useful for understanding the present invention;
FIG. 8 is a side view schematically illustrating the side faces of a base, an XY stage, an operation handle, and a transmission mechanism of the stage device which is attached to the microscope according to the example useful for understanding the present invention;
FIG. 9 is a front view viewed from arrow B of FIG. 8;
FIG. 10 is a cross-sectional view taken along line X-X of FIG. 8;
FIG. 11 is a diagram schematically illustrating an operation when moving the XY stage of the stage device according to the example useful for understanding the present invention to an X direction; and
FIG. 12 is a diagram schematically illustrating an operation when moving the XY stage of the stage device according to the example useful for understanding the present invention to a Y direction.

### Description of an Embodiment and an Example

Modes for carrying out the present invention (hereinbelow, referred to as "embodiments") will be described below with reference to the accompanying drawings. The drawings referenced in the following description are schematically illustrated. Therefore, each component may be illustrated with different dimensions and scales in different drawings. Further, the present invention is not limited to the following embodiments. The same reference numerals designate identical components throughout the drawings.

### Embodiment

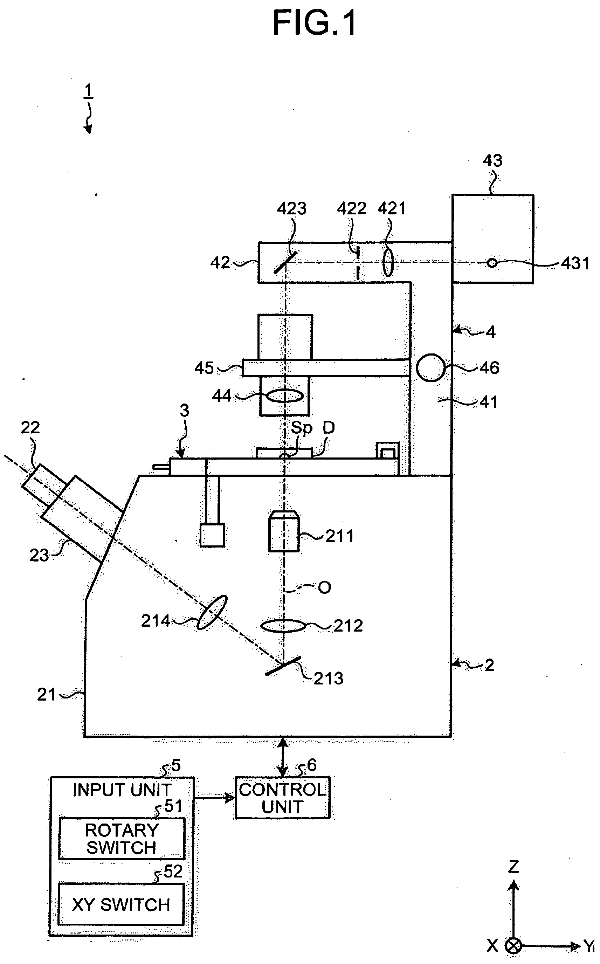

FIG. 1 is a diagram schematically illustrating the entire configuration of a microscope according to an embodiment of the present invention. In the following description, a plane on which a microscope 1 is placed is defined as an XY plane, and a direction perpendicular to the XY plane is defined as a Z direction in FIG. 1.

The microscope 1 illustrated in FIG. 1 includes: a main body 2 as a foundation; a stage device 3 which is attached to the top face of the main body 2, places thereon a specimen Sp stored in a specimen container D such as a dish, a slide glass and a beaker, and is rotatable about a specified axis or movable within the XY plane; an illumination unit 4 which directs light for transmitted-light illumination to the specimen Sp which is placed on the stage device 3 with being stored in the specimen container D from above; an input unit 5 which receives input of an instruction signal instructing an operation of the microscope 1, and a control unit 6 which totally controls electrical operations of the microscope 1. The input unit 5 and the control unit 6 may be arranged inside the main body 2 of the microscope 1, and may also be electrically connected to the main body 2 through a connection unit such as a signal cable.

First, the configuration of the main body 2 will be described. The main body 2 includes a housing 21 for supportting the stage device 3 and the illumination unit 4, and a lens barrel 23 provided on a front face (the left side face in FIG. 1) of the microscope 1. The front face is a side face of the housing 21 which faces a user of the microscope 1 in use, and an eyepiece 22 is provided on the front face.

The housing 21 includes a plurality of objective lenses 211 having different magnifications, a tube lens 212 which images light transmitted through the specimen Sp, the light entering the tube lens 212 through one of the objective lenses 211, a mirror 213 which reflects the light imaged by the tube lens 212, and a relay lens 214 which relays the light reflected by the mirror 213.

The lens barrel 23 includes the eyepiece 22 which collects light that has passed through the relay lens 214 of the housing 21.

Next, the configuration of the illumination unit 4 will be described. The illumination unit 4 includes: an illumination strut 41 which is attached to the main body 2 and extends upward; an arm 42 which extends from the upper end of the illumination strut 41 in a direction perpendicular to the extending direction of the illumination strut 41; a lamp house 43 which is provided near the upper end of the illumination strut 41 on the side opposite to the side to which the arm 42 extends, and has a light source 431 to emit light for transmitted-light illumination; a condenser lens 44 which condenses the light for transmitted-light illumination emitted from the light source 431 of the lamp house 43 and directs the condensed light to the specimen Sp; a condenser holding unit 45 which is attached to approximately the center of the illumination strut 41 and attachably/detachably holds the condenser lens 44; and a condenser focusing operation unit 46 which is provided on the side face of the illumination strut 41 and performs an focusing operation of the condenser lens 44 by moving the condenser holding unit 45 up and down by a manual input.

The arm 42 includes a condenser lens 421 which condenses light for transmitted-light illumination emitted from the lamp house 43, a field stop 422 which can adjust the amount of light transmitted through the condenser lens 421, and a mirror 423 which reflects light passing through the field stop 422 in a direction of the optical axis of the condenser lens 44 (a direction perpendicular to the incident direction), all of which are provided inside the arm 42. The spot diameter of the field stop 422 can be adjusted by a filed stop operation unit (not illustrated).

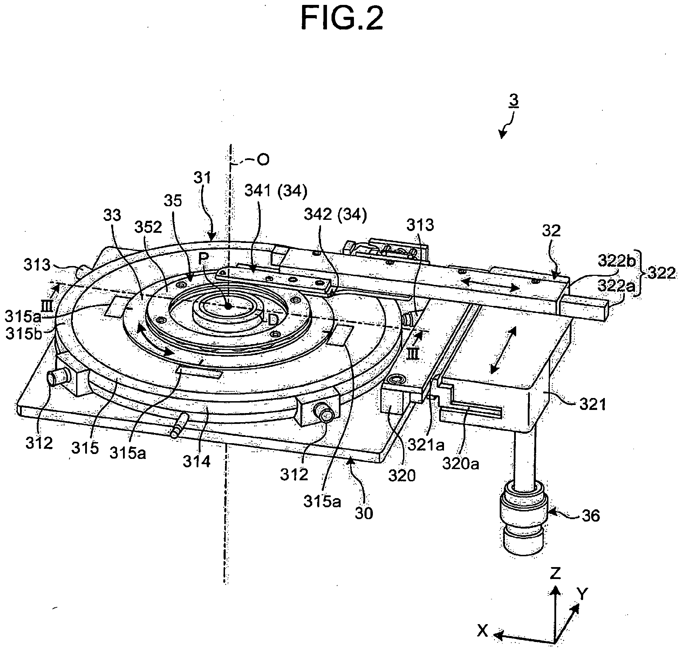

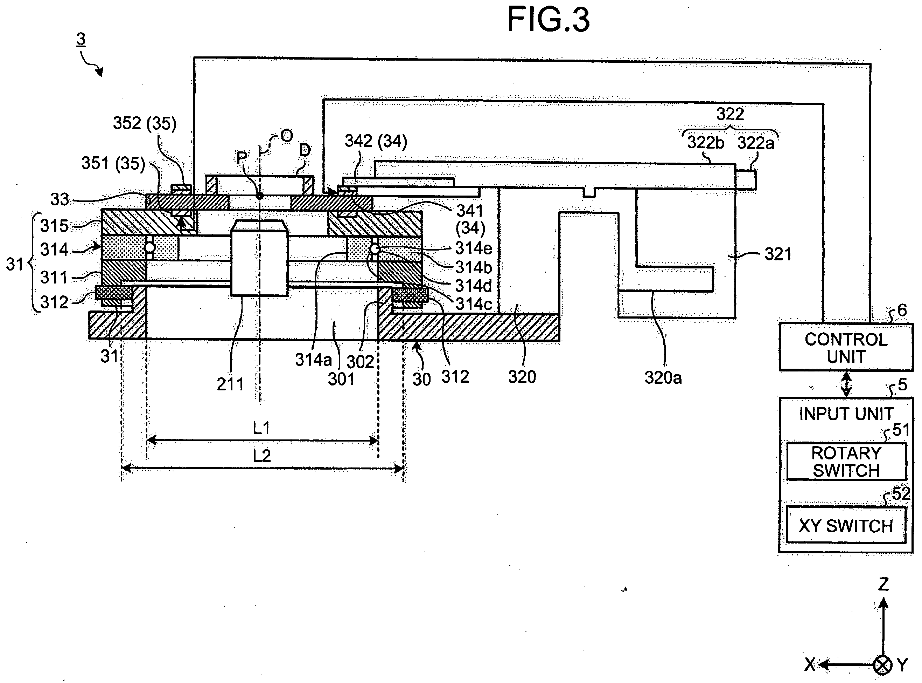

Next, the configuration of the stage device 3 will be described in detail. FIG. 2 is a perspective view illustrating the configuration of the stage device 3. FIG. 3 is a partial sectional view taken along line III-III of FIG. 2. FIGS. 2 and 3 illustrate a state in which the center of the specimen container D and an optical axis O of an objective lens 211 coincide with each other.

As illustrated in FIGS. 2 and 3, the stage device 3 includes: a planar base 30 which is fixed to the housing 21 of the main body 2; a rotary stage (second stage) 31 which is disposed on the base 30 and can rotate about the optical axis O of the objective lens 211, the optical axis O being perpendicular to a movement direction of an XY stage (first stage) 32 (described below); the XY stage (first stage) 32 which is disposed on the base 30 and can move within a plane (XY plane) that is parallel to a principal surface of the base 30; a specimen support 33 which is placed on the rotary stage 31 so as to be slidable in the plane parallel to the principal surface of the base 30; a first clutch mechanism 34 which is coupled to the specimen support 33 and the XY stage 32, and can transmit power from the XY stage 32 to the specimen support 33; a second clutch mechanism 35 which is coupled to the specimen support 33 and the rotary stage 31, and can transmit power from the rotary stage 31 to the specimen support 33; and an operation handle 36 which receives an input of an operation by a user.

The base 30 includes a hole 301 having a specified diameter and an annular portion 302 which extends upward from the top face of the base 30 at the periphery of the hole 301.

The rotary stage 31 includes a centering base 311, a plurality of centering adjustment units 312, a rotation stopper 313, a rotary unit 314, and a rotary table 315.

The centering base 311 has a nearly tubular shape having an inner diameter L2 which is larger than a diameter L1 of the annular portion 302. The centering base 311 is swingably attached to the annular portion 302 of the base 30, and allows the optical axis O of the objective lens 211 and the center of the rotary stage 31 to coincide with each other.

The centering adjustment units 312 are arranged on the side face of the centering base 311 at specified intervals. The centering adjustment units 312 are rotated by a user to adjust biasing force for biasing the centering base 311 toward the optical axis O of the objective lens 211.

The rotation stopper 313 is arranged on the side face of the centering base 311. The rotation stopper 313 restricts the rotation of the centering base 311 relative to the base 30 by pressing the centering base 311 toward the base 30.

The rotary unit 314 is attached to the top face of the centering base 311 and rotates about the optical axis 0 of the objective lens 211. The rotary unit 314 includes an inner annular portion 314a having an annular shape, an outer annular portion 314b which has an annular shape and has an inner diameter larger than the outer diameter of the inner annular portion 314a, and a plurality of rolling units 314e including rollers or balls held between a groove 314c formed on the outer periphery of the inner annular portion 314a and a groove 314d formed on the inner periphery of the outer annular portion 314b. The rotary unit 314 includes a cross roller bearing or the like. Accordingly, the rotary unit 314 smoothly rotates about the optical axis O of the objective lens 211 which is perpendicular to the movement direction of the XY stage 32.

The rotary table 315 is attached to the top face of the rotary unit 314, and rotates about the optical axis O of the objective lens 211 through the rotary unit 314. The rotary table 315 has a nearly annular shape. Further, a rotation angle display unit 315b having an annular shape is attached to the top face of the rotary table 315. The rotation angle display unit 315b displays a rotation angle of the specimen support 33 from a plurality of reference positions 315a.

The XY stage 32 includes an XY base 320, a Y table 321, an X table 322, and the operation handle 36.

The XY base 320 is attached to the top face of the base 30, and extends along the Y direction. The XY base 320 is provided with a Y guide unit 320a for guiding the Y table 321 in the Y direction.

The Y table 321 is slidably attached to the XY base 320 through the Y guide unit 320a, and moves in the Y direction in response to the operation of the operation handle 36. An X guide unit 321a which guides the X table 322 in the Y direction is provided on the top face of the Y table 321 along the Y direction.

The X table 322 is slidably attached to the top face of the Y table 321, and moves in the X direction in response to the operation of the operation handle 36. The X table 322 includes a rod-shaped unit 322a which is slidably held by the X guide unit 321a and has a rectangular parallelepiped shape, and a holding unit 322b which has a nearly C-shaped side face, has opposite ends respectively coupled to the top face of the Y table 321 and the top face of a suspension 352 of the second clutch mechanism 35 (described below), and insertably/removably holds the rod-shaped unit 322a.

The specimen support 33 has an annular shape, and is placed on the rotary table 315 so as to be slidable within the XY plane. The specimen container D is placed on the top face of the specimen support 33.

The first clutch mechanism 34 is coupled to the XY stage 32 and the specimen support 33, and transmits power from the XY stage 32 to the specimen support 33. Specifically, the first clutch mechanism 34 couples the XY stage 32 and the specimen support 33 to each other under the control of the control unit 6. For example, the first clutch mechanism 34 does not transmit power from the XY stage 32 to the specimen support 33 when the rotary stage 31 rotates. On the other hand, the first clutch mechanism 34 transmits power from the XY stage 32 to the specimen support 33 when the XY stage 32 moves. The first clutch mechanism 34 includes an electromagnet 341 which is attached to the bottom face of the suspension 352 of the second clutch mechanism 35 (described below) and a coupling member 342 which is attached to the top face of the suspension 352 of the second clutch mechanism 35. The coupling member 342 is obtained by forming a magnetic body or the like into a band shape. Accordingly, in the first clutch mechanism 34, under the control of the control unit 6, the electromagnet 341 becomes an off state when the rotary stage 31 rotates, and, on the other hand, the electromagnet 341 becomes an on state when the XY stage 32 moves within the XY plane to generate magnetic force, thereby coupling the XY stage 32 and the specimen support 33 to each other.

The second clutch mechanism 35 is coupled to the specimen support 33 and the rotary stage 31, and transmits power from the rotary stage 31 to the specimen support 33. Specifically, the second clutch mechanism 35 couples the rotary table 315 and the specimen support 33 to each other under the control of the control unit 6. For example, the second clutch mechanism 35 transmits power from the rotary stage 31 to the specimen support 33 when the rotary stage 31 rotates. On the other hand, the second clutch mechanism 35 does not transmit power from the rotary stage 31 to the specimen support 33 when the XY stage 32 moves. The second clutch mechanism 35 includes an electromagnet 351 which is arranged in an annual form inside the rotary table 315 and the suspension 352 which is attached to the top face of the specimen support 33. The suspension 352 is obtained by forming a magnetic body into an annual shape. The suspension 352 prevents the specimen support 33 from floating upward. Accordingly, in the second clutch mechanism 35, under the control of the control unit 6, the electromagnet 351 becomes an on state when the rotary stage 31 rotates to generate magnetic force, thereby coupling the rotary table 315 and the specimen support 33 to each other, and, on the other hand, the electromagnet 351 becomes an off state when the XY stage 32 moves within the XY plane.

The operation handle 36 is attached to the bottom face of the Y table 321, and transmits power in the operation direction operated by a user to the XY stage 32.

The input unit 5 includes a rotary switch 51 which receives input of an instruction signal for actuating the second clutch mechanism 35 and an XY switch 52 which receives input of an instruction signal for actuating the first clutch mechanism 34. The rotary switch 51 includes a foot switch, a pull switch or the like. The XY switch 52 includes a foot switch, a pull switch or the like.

When an instruction signal for actuating the second clutch mechanism 35 is input from the rotary switch 51, the control unit 6 stops driving of the electromagnet 341 of the first clutch mechanism 34 while driving the electromagnet 351 of the second clutch mechanism 35. Further, when an instruction signal for actuating the first clutch mechanism 34 is input from the XY switch 52, the control unit 6 drives the electromagnet 341 of the first clutch mechanism 34 while stopping driving of the electromagnet 351 of the second clutch mechanism 35. The control unit 6 includes a central processing unit (CPU).

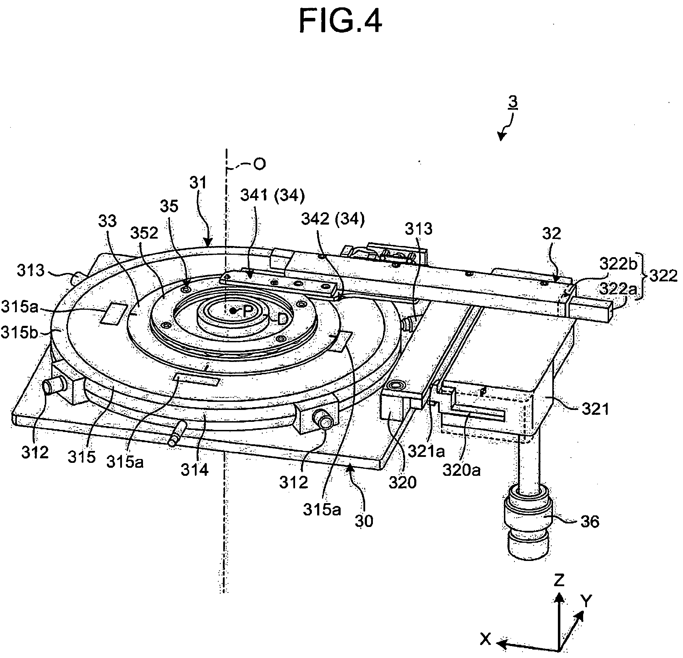

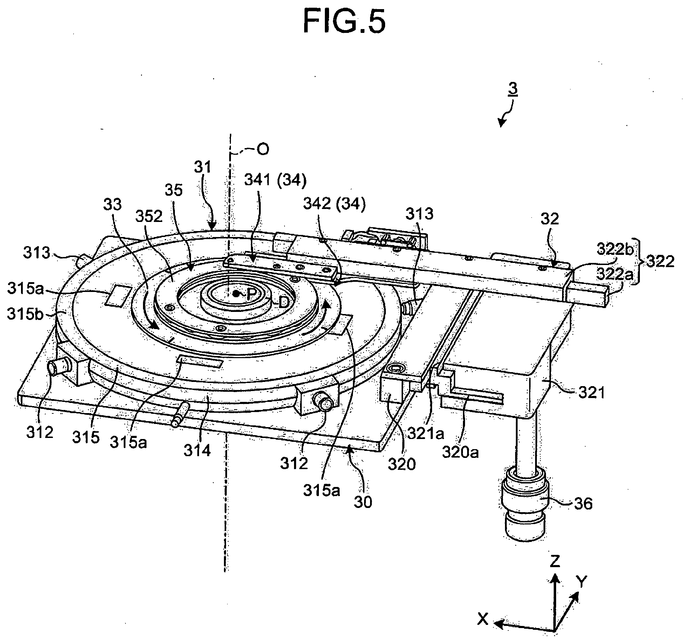

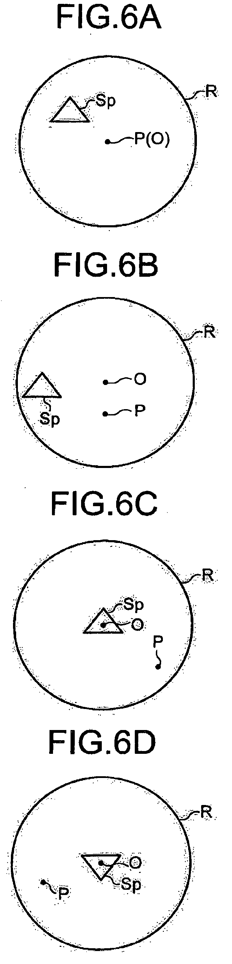

The operation of the stage device 3 having the above configuration will be described with reference to FIGS. 2, 4, and 6A to 6D. FIG. 4 is a perspective view illustrating the stage device 3 after moving the XY stage 32 within the XY plane. FIG. 5 is a perspective view illustrating the stage device 3 after rotating the rotary stage 31. FIGS. 6A to 6D are diagrams schematically illustrating the change of a visual field area observed by the microscope 1 according to the movement of the stage device 3.

When an instruction signal for actuating the first clutch mechanism 34 is input from the XY switch 52 in the state illustrated in FIG. 2, the control unit 6 stops driving of the electromagnet 351 of the second clutch mechanism 35 while driving the electromagnet 341 of the first clutch mechanism 34. Accordingly, the specimen support 33 becomes slidable on the XY plane on the rotary table 315. Specifically, a user can move the specimen support 33 within the XY plane by operating the operation handle 36 in the Y direction and then operating the operation handle 36 in the X direction (FIG. 2 to FIG. 4). For example, as illustrated in FIGS. 6A to 6D, when the center P of the specimen container D and the optical axis O of the objective lens 211 coincide with each other within an observation area R of the microscope 1 (see FIG. 6A), in order to observe the specimen Sp located on the upper left in the drawing, a user moves the operation handle 36 in the Y direction (FIG. 6A to FIG. 6B), and then moves the operation handle 36 in the X direction to adjust the position of the specimen Sp so as to be located on the optical axis O (FIG. 6B to FIG. 6C). As a result, a user can move the specimen support 33 within the XY plane by operating the operation handle 36 in a desired X or Y direction, and can thereby observe a desired region of the specimen Sp.

Further, when an instruction signal for driving the electromagnet 351 of the second clutch mechanism 35 is input from the rotary switch 51 in the state illustrated in FIG. 4, the control unit 6 stops driving of the electromagnet 341 of the first clutch mechanism 34 while driving the electromagnet 351 of the second clutch mechanism 35. Accordingly, the specimen support 33 becomes rotatable in response to the rotation of the rotary table 315. As a result, even when rotating the rotary table 315 (FIG. 4 to FIG. 5), a user can rotate the rotary table 315 about a region to be observed on the specimen Sp (FIG. 6C to FIG. 6D). Therefore, a user can observe the specimen Sp while rotating the specimen Sp.

According to the embodiment of the present invention described above, the first clutch mechanism 34 which can transmit power from the XY stage 32 to the specimen support 33 is provided. When the rotary stage 31 rotates, the first clutch mechanism 34 does not transmit power from the XY stage 32 to the specimen support 33. On the other hand, when the XY stage 32 moves, the first clutch mechanism 34 transmits power from the XY stage 32 to the specimen support 33. Accordingly, even when rotating the rotary stage 31 after moving the XY stage 32, it is possible to allow the rotation axis of the rotary stage 31 and the center of an observation field of the objective lens 211 to coincide with each other. As a result, it is possible to prevent an observation target of the specimen Sp from getting out of a visual field area of the objective lens 211. Therefore, it is possible to reliably prevent sight of the observation target of the specimen Sp from being lost.

Further, according to the embodiment of the present invention, the second clutch mechanism 35 which can transmit power from the rotary stage 31 to the specimen support 33 is provided. When the rotary stage 31 rotates, the second clutch mechanism 35 transmits power from the rotary stage 31 to the specimen support 33. On the other hand, when the XY stage 32 moves, the second clutch mechanism 35 does not transmit power from the rotary stage 31 to the specimen support 33. Accordingly, even when moving the XY stage 32 after rotating the rotary stage 31, it is possible to change the position of an observation target of the specimen Sp.

Further, according to the embodiment of the present invention, the control unit 6 drives the first clutch mechanism 34 or the second clutch mechanism 35 in response to an instruction signal input from the input unit 5. Therefore, a user can move the XY stage 32 or rotate the rotary stage 31 while observing the specimen Sp.

Further, according to the embodiment of the present invention, the rotary stage 31 and the XY stage 32 are arranged at different positions on the base 30. Therefore, it is possible to rotate the rotary stage 31 about an observation target of the specimen Sp, and ensure a large rotation angle.

Further, according to the embodiment of the present invention, the rotary stage 31 has an opening. Therefore, it is possible to house a revolver which holds the plurality of objective lenses 211 having different magnifications inside the rotary stage 31, and switch an objective lens 211 in use to a desired objective lens 211. Example

Next, an example useful for understanding the present invention will be described. In a microscope according to the example, the configuration of a stage device which is attached to the microscope is different from that of the above embodiment. Hereinbelow, the configuration of the stage device in the microscope according to the example will be described. In the following description, the same components as those of the embodiment will be denoted by the same reference numerals as in the embodiment.

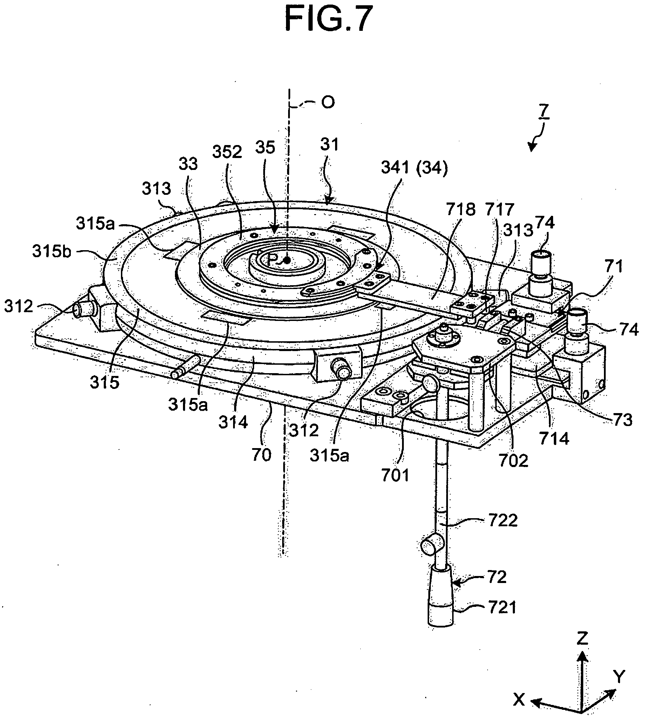

FIG. 7 is a perspective view illustrating the configuration of the stage device which is attached to the microscope according to the example useful for understanding the present invention.

A stage device 7 illustrated in FIG. 7 includes: a base 70; a rotary stage 31 which is attached to the top face of the base 70; a specimen support 33 which is placed on the rotary stage 31; a first clutch mechanism 34 which is coupled to an XY stage (first stage) 71 (described below) and the specimen support 33, and can transmit power from the XY stage 71 to the specimen support 33; a second clutch mechanism 35 which can transmit power from the rotary stage 31 to the specimen support 33; the XY stage (first stage) 71 which is fixed to the top face of the base 70, and moves within an XY plane which is parallel to a principal surface of the base 70, an operation handle 72 configured to receive an input of power; a transmission mechanism 73 which is coupled to the XY stage 71 and the operation handle 72, and transmits power from the operation handle 72 to the XY stage 71; and an adjustment mechanism 74 which can adjust friction force acting between the base 70 and the XY stage 71.

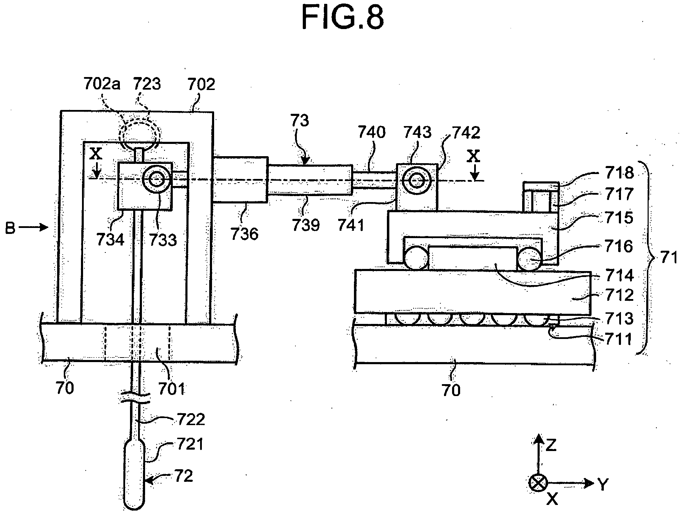

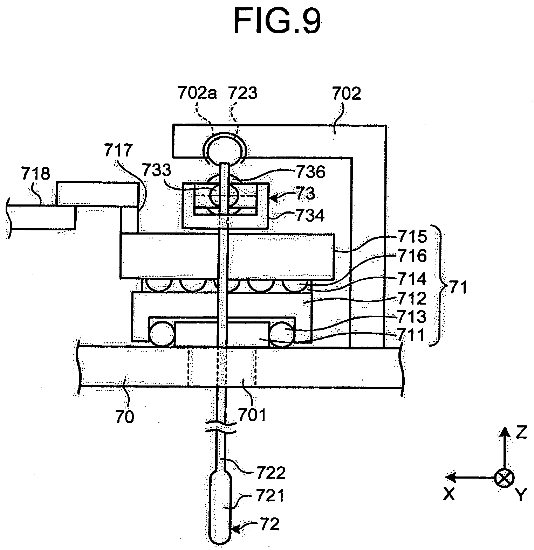

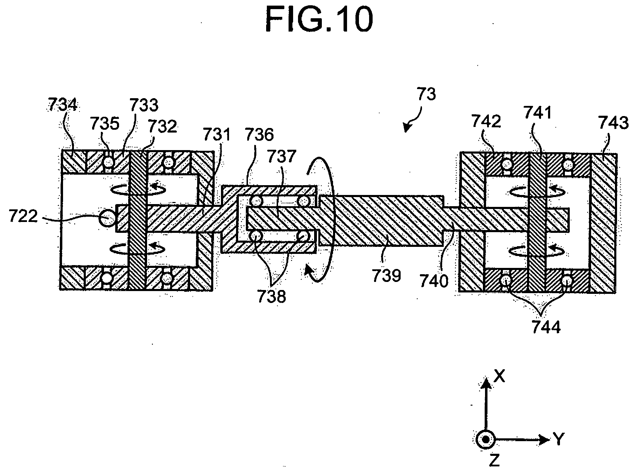

Next, the configurations of the base 70, the XY stage 71, the operation handle 72, and the transmission mechanism 73 will be described in detail. FIG. 8 is a side view schematically illustrating the side faces of the base 70, the XY stage 71, the operation handle 72, and the transmission mechanism 73. FIG. 9 is a front view viewed from arrow B. FIG. 10 is a cross-sectional view taken along line X-X of FIG. 8.

The base 70 includes a hole 701 into which the operation handle 72 of the XY stage 71 (described below) can be inserted and a support unit 702 which is provided on the top face of the base 70. The support unit 702 extends upward (in the Z direction), has a nearly L-shaped side face, and rotatably supports the operation handle 72. The support unit 702 includes a holding unit 702a which turnably holds one end of the operation handle 72.

The XY stage 71 includes: a band-shaped first fixing unit 711 which is attached to the top face of the base 70 and extends in the Y direction; a Y table 712 which has a C-shaped side face and can move in the Y direction on the first fixing unit 711; a plurality of rolling units 713 which are provided between the first fixing unit 711 and the Y table 712 and support the Y table 712 moving on the first fixing unit 711; a band-shaped second fixing unit 714 which is attached to the top face of the Y table 712 and extends in the X direction; an X table 715 which has a C-shaped side face and can move in the X direction on the second fixing unit 714; a plurality of rolling units 716 which are provided between the second fixing unit 714 and the X table 715 and support the X table 715 moving on the second fixing unit 714; a columnar support unit 717 which is attached to the top face of the X table 715 and transmits power from the XY stage 71 to the specimen support 33; and a band-shaped connection member 718 which is connected to the support unit 717 and the first clutch mechanism 34.

The operation handle 72 includes an operation knob 721, a rod-shaped operation shaft 722 which extends from one end of the operation knob 721, and a pedestal 723 which is coupled to the operation shaft 722 and is held by the holding unit 702a. The operation handle 72 is provided in the support unit 702 in such a manner that the pedestal 723 (one end) is rotatably supported by the holding unit 702a and the operation knob 721 (the other end) can move on the surface of a virtual sphere whose center is the pedestal 723 and radius is the length in the longitudinal direction of the operation handle 72.

The transmission mechanism 73 includes: a columnar first support member 731 which is attached to the operation shaft 722 and extends in the Y direction from the operation shaft 722; a first shaft 732 which is provided so as to penetrate the first support member 731 in a direction perpendicular to the first support member 731; a first holding unit 733 which rotatably holds the first shaft 732; a first grasping unit 734 which grasps the first holding unit 733; a plurality of rolling units 735 which are provided between the first holding unit 733 and the first grasping unit 734; a tubular second support member 736 which extends in the Y direction from one end of the first support member 731 and has an outer diameter larger than the diameter of the first support member 731; a third support member 737 which has a columnar shape having a diameter smaller than the inner diameter of the second support member 736 and is inserted into the second support member 736; a plurality of rolling units 738 which are provided between the second support member 736 and the third support member 737; a fourth support member 739 which has a columnar shape having a diameter larger than the diameter of the third support member 737 and smaller than the inner diameter of the second support member 736 and extends in the Y direction from one end of the third support member 737; a fifth support member 740 which has a columnar shape having a diameter equal to the diameter of the first support member 731 and extends in the Y direction from one end of the fourth support member 739; a second shaft 741 which is provided so as to penetrate the fifth support member 740 in a direction perpendicular to the fifth support member 740; a second holding unit 742 which rotatably holds the second shaft 741; a second grasping unit 743 which is attached to the top face of the X table 715 and grasps the second holding unit 742; and a plurality of rolling units 744 which are provided between the second holding unit 742 and the second grasping unit 743.

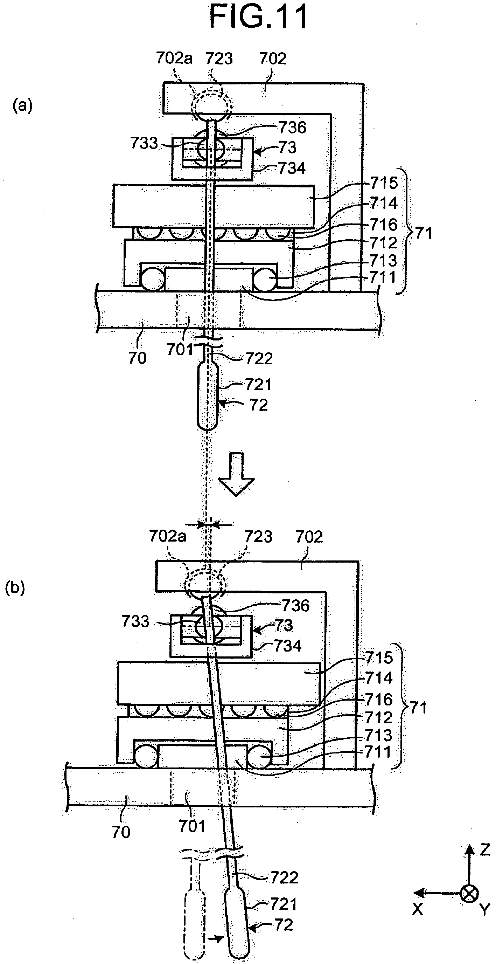

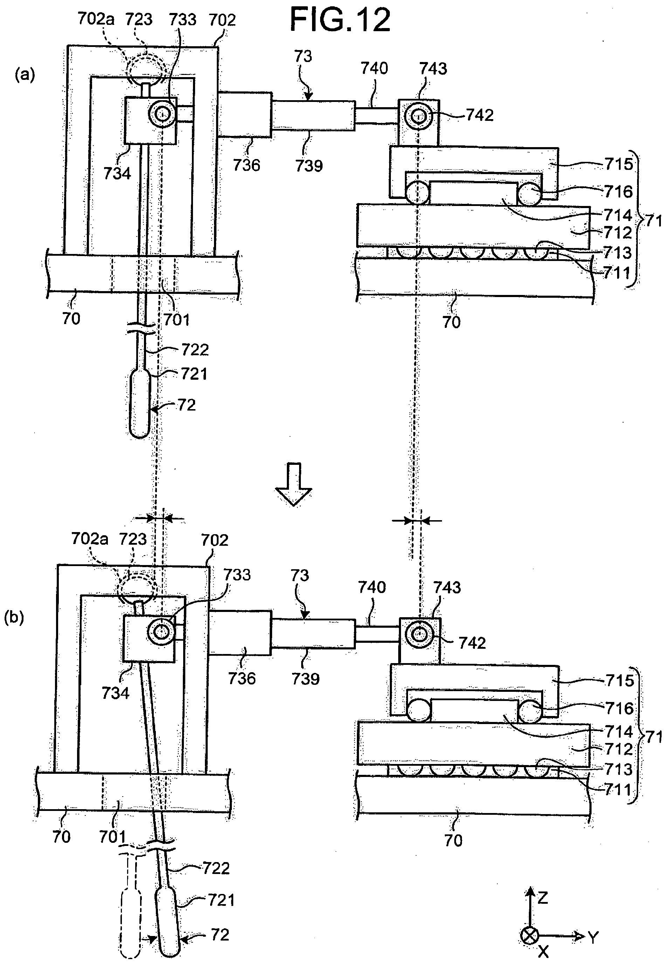

The operation of the XY stage 71 of the stage device 7 having the above configuration will be described with reference to FIG. 11 and FIG. 12. FIG. 11 is a diagram schematically illustrating an operation when moving the XY stage 71 in the X direction. FIG. 12 is a diagram schematically illustrating an operation when moving the XY stage 71 in the Y direction.

When the operation handle 72 is inclined in the X direction by a user in the state illustrated in (a) of FIG. 11, the first shaft 732 moves in the X direction, and the X table 715 thereby moves in the X direction. As a result, the specimen support 33 moves in the X direction (rightward in the drawing) through the transmission mechanism 73 ((a) of FIG. 11 to (b) of FIG. 11).

When the operation handle 72 is inclined in the Y direction (rightward in the drawing) in the state illustrated in (a) of FIG. 12, the first shaft 732 moves in the Y direction, and the Y table 712 thereby moves in the Y direction. As a result, the specimen support 33 moves in the Y direction (rightward in the drawing) through the transmission mechanism 73 ((a) of FIG. 12 to (b) of FIG. 12).

According to the example described above, it is possible to move the specimen support 33 relative to the principal surface of the base 70 within the XY plane by a simple operation.

Further, according to the example, since the adjustment mechanism 74 which can adjust friction force of the XY stage 71 is provided, a desired operational feeling can be set.

In the example, an operation handle which extends upward (in the Z direction) from the base 70 may be provided. In this case, the inclined direction of the operation handle and the movement direction of the specimen support 33 coincide with each other. As a result, a user can move the specimen support 33 within the plane by an intuitive operation.

In the example, a first operation handle which extends upward from the principal surface of the base 70 and receives an input of power and a second operation handle which extends downward from the principal surface of the base 70 and receives an input of power may be provided. In this case, the first handle moves the XY stage 71 in a direction of the received input power through the transmission mechanism 73. The second handle moves the XY stage 71 in a direction opposite to a direction of the received input power. As a result, a user can appropriately select operation directions depending on usage conditions.

Additional advantages and modifications will readily occur to those skilled in the art. Therefore, the invention in its broader aspects is not limited to the specific details and representative embodiments shown and described herein.

## Claims

1. A stage device (3) which is attachable to a microscope (1) for observing a specimen (Sp) by enlarging the specimen (Sp) through an objective lens (211), and on which the specimen (Sp) is placed, the stage device (3) comprising:
a planar base (30) configured to be fixed to the microscope (1);
a first stage (32) that is disposed on the base (30) and is movable in a plane parallel to a principal surface of the base (30); and
a second stage (31) that is disposed on the base (30) and is rotatable about an optical axis (0) of the objective lens (211), the optical axis (O) being perpendicular to a movement direction of the first stage (32),
a specimen support (33) that is placed on the second stage (31) and is slidable in the plane; and **characterized in that** it further comprises
a first clutch mechanism (34) that is coupled to the specimen support (33) and the first stage (32) and is capable of transmitting power from the first stage (32) to the specimen support (33),
wherein the first clutch mechanism (34) is not configured to transmit power from the first stage (32) to the specimen support (33) when the second stage (31) rotates, and is configured to transmit power from the first stage (32) to the specimen support (33) when the first stage (32) moves.

2. The stage device (3) according to claim 1, further comprising a second clutch mechanism (35) that is coupled to the specimen support (33) and the second stage (31) and is capable of transmitting power from the second stage (31) to the specimen support (33),
wherein the second clutch mechanism (35) is configured to transmit power from the second stage (31) to the specimen support (33) when the second stage (31) rotates, and is not configured to transmit power from the second stage (31) to the specimen support (33) when the first stage (32) moves.

3. The stage device (3) according to claim 2, wherein each of the first clutch mechanism (34) and the second clutch mechanism (35) includes an electromagnet.

4. The stage device (3) according to claim 2 or 3, further comprising:
an input unit (5) configured to receive an instruction signal for driving the first clutch mechanism (34) or the second clutch mechanism (35); and
a control unit (6) configured to drive the first clutch mechanism (34) or the second clutch mechanism (35) in response to the instruction signal received by the input unit (5).

5. The stage device (3) according to any one of claims 2 to 4, wherein the second clutch mechanism (35) is provided on the second stage (31).

6. The stage device (3) according to any one of claims 2 to 5, further comprising:
a rod-shaped operation handle (36) that has a first end rotatably attached to the base (30) and is configured to receive an input of power; and
a transmission mechanism (73) that is coupled to the first stage (32) and the operation handle (36) and is configured to transmit power from the operation handle (36) to the first stage (32),
wherein a second end of the operation handle (36) is movable on a surface of a virtual sphere whose center is the first end and whose radius is a length in a longitudinal direction of the operation handle (36).

## Patentansprüche

1. Bühnenvorrichtung (3), die an einem Mikroskop (1) angebracht werden kann, um eine Probe (Sp) durch Vergrößern der Probe (Sp) durch eine Objektivlinse (211) zu betrachten, und auf der die Probe (Sp) platziert wird, wobei die Bühnenvorrichtung (3) aufweist:
eine ebene Basis (30), die dazu ausgebildet ist, an dem Mikroskop (1) befestigt zu werden;
eine erste Bühne (32), die auf der Basis (30) angeordnet ist und in einer Ebene parallel zu einer Hauptoberfläche der Basis (30) bewegt werden kann; und
eine zweite Bühne (31), die auf der Basis (30) angeordnet ist und um eine optische Achse (O) der Objektivlinse (211) drehbar ist, wobei die optische Achse (O) senkrecht zu einer Bewegungsrichtung der ersten Bühne (32) verläuft,
einen Probenhalter (33), der auf der zweiten Bühne (31) platziert ist und in der Ebene verschiebbar ist; und **dadurch gekennzeichnet, dass** sie ferner aufweist:
einen ersten Kupplungsmechanismus (34), der mit dem Probenhalter (33) und der ersten Bühne (32) gekoppelt ist und Kraft von der ersten Bühne (32) auf den Probenhalter (33) zu übertragen vermag,
wobei der erste Kupplungsmechanismus (34) nicht dazu ausgebildet ist, Kraft von der ersten Bühne (32) auf den Probenhalter (33) zu übertragen, wenn sich die zweite Bühne (31) dreht, und dazu ausgebildet ist, Kraft von der ersten Bühne (32) auf den Probenhalter (33) zu übertragen, wenn sich die erste Bühne (32) bewegt.

2. Bühnenvorrichtung (3) nach Anspruch 1, die ferner einen zweiten Kupplungsmechanismus (35) aufweist, der mit dem Probenhalter (33) und der zweiten Bühne (31) gekoppelt ist und Kraft von der zweiten Bühne (31) auf den Probenhalter (33) zu übertragen vermag,
wobei der zweite Kupplungsmechanismus (35) dazu ausgebildet ist, Kraft von der zweiten Bühne (31) auf den Probenhalter (33) zu übertragen, wenn sich die zweite Bühne (31) dreht, und nicht dazu ausgebildet ist, Kraft von der zweiten Bühne (31) auf den Probenhalter (33) zu übertragen, wenn sich die erste Bühne (32) bewegt.

3. Bühnenvorrichtung (3) nach Anspruch 2, wobei der erste Kupplungsmechanismus (34) und der zweite Kupplungsmechanismus (35) jeweils einen Elektromagneten aufweist.

4. Bühnenvorrichtung (3) nach Anspruch 2 oder 3, ferner aufweisend:
eine Eingabeeinheit (5), die dazu ausgebildet ist, ein Anweisungssignal zum Antreiben des ersten Kupplungsmechanismus (34) oder des zweiten Kupplungsmechanismus (35) zu empfangen; und
eine Steuereinheit (6), die dazu ausgebildet ist, den ersten Kupplungsmechanismus (34) oder den zweiten Kupplungsmechanismus (35) in Reaktion auf das von der Eingabeeinheit (5) empfangene Anweisungssignal anzutreiben.

5. Bühnenvorrichtung (3) nach einem der Ansprüche 2 bis 4, wobei der zweite Kupplungsmechanismus (35) auf der zweiten Bühne (31) vorgesehen ist.

6. Bühnenvorrichtung (3) nach einem der Ansprüche 2 bis 5, ferner aufweisend:
einen stabförmigen Betätigungsgriff (36), der ein erstes Ende hat, das drehbar an der Basis (30) angebracht ist, und dazu ausgebildet ist, eine aufgebrachte Kraft aufzunehmen; und
einen Übertragungsmechanismus (73), der mit der ersten Bühne (32) und dem Betätigungsgriff (36) gekoppelt und dazu ausgebildet ist, Kraft von dem Betätigungsgriff (36) auf die erste Bühne (32) zu übertragen,
wobei ein zweites Ende des Betätigungsgriffs (36) auf einer Oberfläche einer virtuellen Kugel bewegt werden kann, deren Mitte das erste Ende ist und deren Radius eine Länge in einer Längsrichtung des Betätigungsgriffs (36) ist.

## Revendications

1. Dispositif (3) de platine qui peut être attaché à un microscope (1) destiné à observer un spécimen (Sp) en agrandissant le spécimen (Sp) par l'intermédiaire d'un objectif (211), et sur lequel le spécimen (Sp) est placé, le dispositif (3) de platine comprenant :
une base plane (30) configurée pour être fixée au microscope (1) ;
une première platine (32) qui est disposée sur la base (30) et est mobile dans un plan parallèle à une surface principale de la base (30) ; et
une deuxième platine (31) qui est disposée sur la base (30) et est rotative autour d'un axe optique (0) de l'objectif (211), l'axe optique (O) étant perpendiculaire à une direction de déplacement de la première platine (32),
un support (33) de spécimen qui est placé sur la deuxième platine (31) et est coulissant dans le plan ; et
**caractérisé en ce qu'**il comprend en outre
un premier mécanisme d'embrayage (34) qui est couplé au support (33) de spécimen et à la première platine (32) et est capable de transmettre une puissance de la première platine (32) au support (33) de spécimen,
dans lequel le premier mécanisme d'embrayage (34) n'est pas configuré pour transmettre la puissance de la première platine (32) au support (33) de spécimen lorsque la deuxième platine (31) tourne, et est configuré pour transmettre la puissance de la première platine (32) au support (33) de spécimen lorsque la première platine (32) se déplace.

2. Dispositif (3) de platine selon la revendication 1, comprenant en outre un deuxième mécanisme d'embrayage (35) qui est couplé au support (33) de spécimen et à la deuxième platine (31) et est capable de transmettre une puissance de la deuxième platine (31) au support (33) de spécimen,
dans lequel le deuxième mécanisme d'embrayage (35) est configuré pour transmettre la puissance de la deuxième platine (31) au support (33) de spécimen lorsque la deuxième platine (31) tourne, et n'est pas configuré pour transmettre la puissance de la deuxième platine (31) au support (33) de spécimen lorsque la première platine (32) se déplace.

3. Dispositif (3) de platine selon la revendication 2, dans lequel chacun parmi le premier mécanisme d'embrayage (34) et le deuxième mécanisme d'embrayage (35) comprend un électroaimant.

4. Dispositif (3) de platine selon la revendication 2 ou 3, comprenant en outre :
une unité d'entrée (5) configurée pour recevoir un signal d'instruction destiné à entraîner le premier mécanisme d'embrayage (34) ou le deuxième mécanisme d'embrayage (35) ; et
une unité de commande (6) configurée pour entraîner le premier mécanisme d'embrayage (34) ou le deuxième mécanisme d'embrayage (35) en réponse au signal d'instruction reçu par l'unité d'entrée (5).

5. Dispositif (3) de platine selon l'une quelconque des revendications 2 à 4, dans lequel le deuxième mécanisme d'embrayage (35) est prévu sur la deuxième platine (31).

6. Dispositif (3) de platine selon l'une quelconque des revendications 2 à 5, comprenant en outre :
une poignée d'actionnement (36) en forme de tige qui comporte une première extrémité attachée en rotation à la base (30) et est configurée pour recevoir une entrée de puissance ; et
un mécanisme de transmission (73) qui est couplé à la première platine (32) et à la poignée d'actionnement (36) et est configuré pour transmettre la puissance de la poignée d'actionnement (36) à la première platine (32),
dans lequel une deuxième extrémité de la poignée d'actionnement (36) est mobile sur une surface d'une sphère virtuelle dont le centre correspond à la première extrémité et dont le rayon correspond à une longueur dans la direction longitudinale de la poignée d'actionnement (36).
